# EUROPEAN PATENT SPECIFICATION

(11) **EP 4 667 219 B1**
(45) Date of publication and mention of the grant of the patent: **09.12.2026**
(21) Application number: 25176566.5
(22) Date of filing: 15.05.2025
(51) Int. Cl.: B32B 27/36, B32B 7/027, B32B 27/08, B32B 27/18, B32B 27/20, C08L 67/02

(54) **MULTILAYER BIODEGRADABLE FILM FOR THERMAL LAMINATION**
MEHRSCHICHTIGE BIOLOGISCH ABBAUBARE FOLIE ZUR THERMISCHEN LAMINIERUNG
FILM BIODÉGRADABLE MULTICOUCHE POUR STRATIFICATION THERMIQUE

(30) Priority: 17.06.2024 IT 202400013843
(43) Date of publication of application: 24.12.2025
(73) Proprietor: Novamont S.p.A., 28100 Novara (IT)
(72) Inventor: SAGLIO, Beatrice, 21013 Gallarate (VA) (IT); FAIELLA, Federico, 20125 Milano (IT); GESTI GARCIA, Sebastià, 10100 Torino (IT)
(74) Representative: Zanoli, Enrico

(56) References cited:
- WO-A1-2023/061891
- WO-A1-2024/068417
- JP-A- H06 171 050
- US-A1- 20240 017 528

## Description

The present invention relates to a multilayer biodegradable film particularly suitable for use in thermal lamination. Thermal laminating films, hereinafter referred to as liners, are used on formed substrates of cellulose origin (containers of various shapes with at least one cavity) for making food packaging containers or beverage dispensing capsules.

The term thermal lamination refers to the process of hot-forming and adhesion between two layers by the simple effect of temperature and pressure, without the use of solvent-based adhesives or adhesion promoters.

Substrates of cellulose origin are defined as, for example, paper, paperboard or cellulose pulp. The use of liners is intended to waterproof the inner surface of containers, to give them a barrier to oils and greases, to make them suitable for contact with foodstuffs and, in some cases, to introduce a barrier to oxygen and/or water vapour.

### State of the art

The food and beverage market is looking for more sustainable alternatives to those on the market and increasingly recognises added value in the use of cellulose-based products and materials from renewable sources. For this reason, packaging solutions made of cellulose-based materials are becoming increasingly popular. For certain types of applications or food categories, these must be protected from contact with liquids and fatty substances, which would otherwise be absorbed by the cellulose and alter its properties and mechanical strength. For this reason, the containers must be "protected" in some way by applying a coating or film. Thermal lamination liners fall into this category.

The main characteristics required of liners are i) the ability to be formed inside the container, completely and perfectly covering the inner surface of the container cavity, the shapes of which can also be very different from one to another, and with different stretching ratios; ii) the ability, once heated, to weld to the inner surface of the container through only the application of heat and pressure.

In addition to the above-mentioned characteristics, liners can also impart other properties to the packaging; in fact, by appropriately choosing their constituent materials, an oxygen or moisture barrier effect can be achieved.

By using a compostable liner it is possible to obtain packaging that, in addition to being recyclable in the paper chain, can also be disposed of in organic waste collection, as it is often heavily contaminated with food residues after use. In addition, if the liner is separated from the cellulose substrate, it is possible to deliver one to organic waste collection or send it for mechanical or chemical recycling and the other to paper collection.

There are several documents in the art describing thermally laminated containers with compostable liners.

WO2023287278 (Huhtamaki) describes a food packaging comprising a biodegradable multilayer laminate consisting of aliphatic polymers in the outer layers and an oxygen barrier on the inside.

WO2023061891 and WO2024068417 (Nestlé), on the other hand, describe a cellulose pulp coffee capsule with a multilayer compostable polymer liner with oxygen barrier properties. Specifically, the liner layer that is in contact with the cellulose pulp is a biodegradable polymer chosen from polybutylene succinate (PBSA), polybutylene adipate terephthalate (PBTA), polylactic acid (PLA), starch, polyhydroxy alkanoates (PHA), or mixtures thereof, with a melting temperature below 80°C.

US 2024/017528 describes multilayer cellulose -based films.

JP H06 171050 discloses an aliphatic polyester resin containing paper as substrate with a melting point above 85°C.

A fundamental requirement for liners is to ensure high adhesion to the cellulose substrate, an essential feature to ensure the functionality of the packaging, whether a container or a beverage capsule.

In general the way to increase the adhesion between a liner and the substrate is to increase the temperature at which thermal lamination is carried out; in this way the film heats up more, approaching its melting temperature, and is thus better able to bond to the cellulose. However, using a thermal lamination temperature that is too high can result in the creation of local defects on the surface of the liner, such as micro-holes, which enlarge as the liner is stretched by the vacuum. The geometry of the container is what drives the stretching (elongation) of the liner. As a result, the liner is subjected to different stretching ratios depending on the area of the container covered.

In the known art (WO2023061891 and WO2024068417) it is stated that in order to have good adhesion of the liner to the pulp, the layer in contact with the pulp must be chosen from PBSA, PBAT, PLA, PHA and must have a melting temperature below 80°C.

In reality, what is described in the known art does not make it possible to have liners that have complete adhesion and fill all cavities optimally.

A need is therefore felt for liners capable of optimum adhesion and at the same time fully occupying all product spaces, even for complex geometries.

The Applicant has surprisingly found liners with higher forces of adhesion to the cellulose substrate than those in the known art, thus enabling defect-free thermally laminated containers to be obtained even when using lower thermal lamination temperatures.

It is therefore one object of the present invention to provide a multilayer film with at least two layers for thermal lamination on cellulose-based substrates comprising:
a polymer layer A comprising a biodegradable polymer chosen from among an aliphatic-aromatic polyester i), an aliphatic polyester ii), or a mixture thereof, said aliphatic polyester ii) being chosen from aliphatic polyesters from diacid diols, polyhydroxyalkanoate and mixtures thereof, and
a second polymer layer B in contact with the cellulose-based substrate comprising at least 50% by weight of a biodegradable aliphatic polyester iii), the dicarboxylic component of which comprises, or preferably consists of, one or more aliphatic dicarboxylic acids having between 7 and 13 carbon atoms and the diol component of which is chosen from butanediol or ethylene glycol; said layer B must not exhibit melting peaks at temperatures above 75°C measured by differential scanning calorimetry (DSC).

It is a second object of the present invention to use a multilayer film with at least two layers for thermal lamination on cellulose-based substrates comprising:
a polymer layer A comprising a biodegradable polymer chosen from among an aliphatic-aromatic polyester i), an aliphatic polyester ii), or a mixture thereof, and
a second polymer layer B in contact with the cellulose-based substrate comprising at least 50% by weight of a biodegradable aliphatic polyester iii), the dicarboxylic component of which comprises, or preferably consists of, one or more aliphatic dicarboxylic acids having between 7 and 13 carbon atoms and the diol component of which is chosen from butanediol or ethylene glycol; said layer B must not exhibit melting peaks at temperatures above 75°C measured by differential scanning calorimetry (DSC).

Differential scanning calorimetry (DSC) is a thermal analysis technique for characterising polymer materials. The melting temperature (Tm) of a semi-crystalline polymer corresponds to the state transition from the crystalline phase to the viscous liquid phase. This is a first-order transition, which occurs over a certain temperature range, because polymers are not monodisperse but always have a distribution of molecular weights. The melting temperature (Tm) is advantageously measured by means of a Perkin Elmer Pyris Diamond calorimeter using the conditions given below:
- 60s isotherm at -20°C
- 1st scan from -20°C to 200°C at 20°C/min
- 60s isotherm at 200°C
- 2nd scan from 200°C to -20°C at 10°C/min
- 60s isotherm at -20°C
- 3rd scan from -20°C to 200°C at 20°C/min

The melting temperature (Tm) corresponds to the maximum of the endothermic peak found during the heating scan.

For the purposes of the present invention, layer B has no melting peaks above 75°C in the first scan.

With regard to polymer layer A in the multilayer film according to the invention, aliphatic-aromatic polyester i) comprises:
a) a dicarboxylic component comprising, in relation to the total dicarboxylic component
   a1) 30-70% in moles, preferably 40-60% in moles, of units derived from at least one aromatic dicarboxylic acid;
   a2) 70-30% in moles, preferably 60-40% in moles, of units derived from at least one saturated aliphatic dicarboxylic acid;
   a3) 0-5% in moles of units derived from at least one unsaturated aliphatic dicarboxylic acid;
b) a diol component comprising, in relation to the total diol component:
   b1) 95-100% in moles of units derived from at least one saturated aliphatic diol;
   b2) 0-5% in moles of units from at least one unsaturated aliphatic diol.

The aromatic dicarboxylic acids in component a1) are preferably selected from aromatic dicarboxylic acids of the phthalic acid type, preferably terephthalic acid or isophthalic acid, more preferably terephthalic acid and heterocyclic aromatic dicarboxylic compounds, preferably 2,5-furandicarboxylic acid, 2,4-furandicarboxylic acid, 2,3-furandicarboxylic acid, 3,4-furandicarboxylic acid, more preferably 2,5-furandicarboxylic acid, their esters, salts and mixtures.

In a preferred embodiment said aromatic dicarboxylic acids comprise: from 1 to 99% in moles, preferably from 5 to 95% and more preferably from 10 to 80%, of terephthalic acid, its esters or salts.

The saturated aliphatic dicarboxylic acids in component a2) are preferably selected from saturated C2-C24, preferably C4-C13, more preferably C4-C11 dicarboxylic acids, their C1-C24, preferably C1-C4, alkyl esters, their salts and their mixtures. Preferably, the saturated aliphatic dicarboxylic acids are selected from succinic acid, 2-ethylsuccinic acid, glutaric acid, 2-methylglutaric acid, adipic acid, pimelic acid, suberic acid, azelaic acid, sebacic acid, undecandioic acid, dodecandioic acid, brassylic acid, octadecandioic acid and their C1-24 alkyl esters. In a preferred embodiment of this invention the saturated aliphatic dicarboxylic acid comprises mixtures comprising at least 50% in moles, preferably more than 60% in moles, more preferably more than 65% in moles, of succinic acid, adipic acid, azelaic acid, sebacic acid, brassylic acid, their C1-C24, preferably C1-C4, esters, and mixtures thereof.

The unsaturated aliphatic dicarboxylic acids in component a3) are preferably selected from itaconic acid, fumaric acid, 4-methylene-pimelic acid, 3,4-bis (methylene) nonandioic acid, 5-methylene-nonandioic acid, their C1-C24, preferably C1-C4, alkyl esters, their salts and mixtures thereof. In a preferred embodiment of the present invention the unsaturated aliphatic dicarboxylic acids comprise mixtures comprising at least 50% in moles, preferably more than 60% in moles, more preferably more than 65% in moles, of itaconic acid and its C1-C24, preferably C1-C4, alkyl esters. More preferably the unsaturated aliphatic dicarboxylic acids comprise itaconic acid.

With regard to the saturated aliphatic diols in component b1), these are preferably chosen from 1,2-ethanediol, 1,2-propanediol, 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol, 1,13-tridecanediol, 1,4-cyclohexanedimethanol, neopentylglycol, 2-methyl-1,3-propanediol, dianhydrosorbitol, dianhydromannitol, dianhydroiditol, cyclohexanediol, cyclohexanmethanediol, dialkylene glycols and polyalkylene glycols with molecular weights of 100-4000 such as polyethylene glycol, polypropylene glycol and mixtures thereof. Preferably the diol component comprises at least 50% in moles of one or more diols chosen from 1,2-ethanediol, 1,3-propanediol, 1,4-butanediol. More preferably the diol component comprises or consists of 1,4-butanediol.

With regard to the unsaturated aliphatic diols in component b2), these are preferably selected from *cis* 2-buten-1,4-diol, *trans* 2-buten-1,4-diol, 2-butyn-1,4-diol, *cis* 2-penten-1,5-diol, *trans* 2-penten-1,5-diol, 2-pentyn-1,5-diol, *cis* 2-hexen-1,6-diol, *trans* 2-hexen-1,6-diol, 2-hexyn-1,6-diol, *cis* 3-hexen-1,6-diol, *trans* 3-hexen-1,6-diol, 3-hexen-1,6-diol.

The molecular weight Mn of said aliphatic-aromatic polyester i) in polymer layer A is preferably above 20000, more preferably above 40000. With regard to the polydispersion index of molecular weights, Mw/Mn, this is preferably between 1.5 and 10, more preferably between 1.6 and 5, and even more preferably between 1.8 and 2.7.

Molecular weights Mn and Mw may be measured by gel permeation chromatography (GPC). The determination may be carried out with the chromatographic system maintained at 40 °C, using a set of two columns in series (particle diameter 5 µm and 3 µm with mixed porosity), a refractive index detector, chloroform as eluent (flow rate 0.5 ml/min) and using polystyrene as a reference standard.

Preferably, said aliphatic-aromatic polyester i) in polymer layer A has an intrinsic viscosity of more than 0.3 dl/g (measured using a Ubbelohde viscosity meter for solutions of 0.2 g/dl concentration in CHCl3 at 25°C), preferably between 0.3 and 2 dl/g, more preferably between 0.4 and 1.2 dl/g.

The terminal acid groups content of said aliphatic-aromatic polyester i) in polymer layer A is preferably less than 100 meq/kg, preferably less than 60 meq/kg and even more preferably less than 40 meq/kg.

The terminal acid groups content may be measured as known in the art, for example as is shown in WO2017216150.

Said aliphatic-aromatic polyester i) in polymer layer A is biodegradable. In the meaning of the present invention, biodegradable polymer means a polymer that is biodegradable according to EN 13432.

Said aliphatic-aromatic polyester i) in polymer layer A may be synthesised according to any of the processes known in the state of the art. In particular, it may advantageously be obtained using a polycondensation reaction.

Advantageously, the synthesis process may be carried out in the presence of a suitable catalyst. Examples of suitable catalysts include organometallic tin compounds, for example stannic acid derivatives, titanium compounds, for example orthobutyl titanate, aluminium compounds, for example triisopropyl aluminium, antimony and zinc compounds, and zirconium and their mixtures.

With regard to aliphatic polyester ii) in polymer layer A, this is chosen from aliphatic polyesters of diacid diols, polyhydroxyalkanoates and mixtures thereof. Preferably said aliphatic polyester ii) is a diacid diol polyester comprising:
c) a dicarboxylic component comprising, in relation to the total dicarboxylic component:
   c1) 60-100% in moles of units derived from succinic acid;
   c2) 0-40% in moles of units derived from at least one saturated dicarboxylic acid with a number of carbon atoms greater than 4;
d) a diol component comprising, in relation to the total diol component:
   d1) 95-100% in moles of units derived from at least one 1,4-butanediol;
   d2) 0-5% in moles of units derived from at least one aliphatic diol other than 1,4-butanediol;

The saturated aliphatic dicarboxylic acids other than succinic acid in component c2) are preferably selected from saturated C5-C24, preferably C5-C13, more preferably C7-C11, dicarboxylic acids, their C1-C24, more preferably C1-C4, alkyl esters, their salts and their mixtures. Preferably the saturated aliphatic dicarboxylic acids are selected from: succinic acid (component c1), 2-ethylsuccinic acid, glutaric acid, 2-methylglutaric acid, adipic acid, pimelic acid, suberic acid, azelaic acid, sebacic acid, undecanedioic acid, dodecanedioic acid, brassylic acid, and their C1-24 alkyl esters. Preferably, aliphatic polyester ii) comprises between 10% and 35% in moles of component c2) and 65% and 90% in moles of component c1).

In a particularly preferred aspect of the invention, component c2) is azelaic acid.

With regard to the unsaturated aliphatic diols in component d2), these are preferably selected from *cis* 2-buten-1,4-diol, *trans* 2-buten-1,4-diol, 2-butyn-1,4-diol, *cis* 2-penten-1,5-diol, *trans* 2-penten-1,5-diol, 2-pentyn-1,5-diol, *cis* 2-hexen-1,6-diol, *trans* 2-hexen-1,6-diol, 2-hexyn-1,6-diol, *cis* 3-hexen-1,6-diol, *trans* 3-hexen-1,6-diol, 3-hexen-1,6-diol.

The molecular weight Mn of said aliphatic polyester ii) in polymer layer A is preferably greater than 20000, more preferably greater than 40000. With regard to the polydispersity index of the molecular weights, Mw/Mn, this is preferably between 1.5 and 10, more preferably between 1.6 and 5 and even more preferably between 1.8 and 2.7.

Molecular weights Mn and Mw may be measured by Gel Permeation Chromatography (GPC). The determination may be conducted with the chromatographic system maintained at 40 °C, using a set of two columns in series (particle diameter 5 µm and 3 µm with mixed porosity), a refractive index detector, chloroform as eluent (flow rate 0.5 ml/min) and using polystyrene as a reference standard.

Preferably, said aliphatic polyester ii) has an inherent viscosity (measured with an Ubbelohde viscometer for solutions in CHCl3 of concentration 0.2 g/dl at 25 °C) greater than 0.3 dl/g, preferably between 0.3 and 2 dl/g, more preferably between 0.4 and 1.4 dl/g.

The terminal acid group content of said aliphatic polyester ii) is preferably between 30 and 160 meq/kg.

The terminal acid groups content may be measured as known in the art, for example as shown in WO2017216150.

Said aliphatic polyester ii) may be synthesised according to any of the processes known to the state of the art. In particular, they may advantageously be obtained by a polycondensation reaction.

Advantageously the synthesis process may be conducted in the presence of a suitable catalyst. Suitable catalysts may, by way of example, include organometallic Tin compounds, for example stannic acid derivatives, Titanium compounds, for example ortho-butyl titanate, Aluminium compounds, for example triisopropyl aluminium, Antimony and Zinc and Zirconium compounds and mixtures thereof.

Said aliphatic polyester in polymer layer A (component ii) is biodegradable. In the meaning of the present invention, biodegradable polymer means a polymer that is biodegradable according to EN 13432.

In a preferred aspect of the invention, polymer layer A is chosen from a poly(butylene terephthalate-co-adipate) (PBTA); a PBS copolymer with adipic acid, sebacic acid or azelaic acid; a mixture of polylactic acid and PBS copolymer with adipic acid, sebacic acid or azelaic acid; a mixture of polylactic acid and PBTA or a mixture of polylactic acid, PBTA and talc. In a preferred aspect of the invention the PBS copolymer is poly(butylene succinate-co-azelate) (PBSAz).

In a preferred aspect of the invention said aliphatic polyester ii) in polymer layer A comprises up to 70%, more preferably up to 37% by weight of the total polymer component in layer A, of a polyhydroxyalkanoate iv).

Said polyhydroxyalkanoate iv) is more preferably chosen from the group consisting of lactic acid polyesters, poly-ε-caprolactone, polyhydroxybutyrate, polyhydroxybutyrate-valerate, polyhydroxybutyrate-propanoate, polyhydroxybutyrate-hexanoate, polyhydroxybutyrate-decanoate, polyhydroxybutyrate-dodecanoate, polyhydroxybutyrate-hexadecanoate, polyhydroxybutyrate-octadecanoate, poly-3-hydroxybutyrate-4-hydroxybutyrate. Preferably said polyhydroxyalkanoate comprises at least 80% by weight of one or more polyesters of lactic acid.

Particularly preferred are lactic acid polyesters containing at least 95% by weight of repeating units derived from L-lactic or D-lactic acid or combinations thereof.

In a particularly preferred aspect, polyhydroxyalkanoate iv) is chosen from polylactic acid, polyhydroxybutyrate or copolymers of polyhydroxybutyrate.

Advantageously polymer layer A may contain a process additive, which migrates to the surface and provides a kind of coating to prevent the molten polymer from sticking to the metal. Said process additive is preferably chosen from the family of stearates, such as for example calcium stearate, sodium stearate, magnesium stearate or fatty acid amides, such as for example stereamide, behenamide, erucamide, oleamide, ethylene bis-stereamide (EBS), ethylene bis oleamide and derivatives thereof. Preferably the process additive is chosen from calcium stearate or ethylene-bis-stereamide (EBS).

In the composition of the polymer layer A there is present in the polymer 0-30% w/w, preferably between 0.1 and 20% w/w, even more preferably between 3 and 5% w/w of at least one inorganic mineral filler v), which is preferably chosen from kaolin, barytes, clay, talc, calcium and magnesium, iron and lead carbonates, aluminium hydroxide, kieselguhr, aluminium sulfate, barium sulfate, silica, mica, titanium dioxide and wollastonite.

In a preferred embodiment of the present invention, inorganic mineral filler v) in the composition of polymer layer A comprises talc.

In the multilayer film according to the present invention, polymer layer A is preferably chosen from an aliphatic-aromatic polyester i), an aliphatic polyester ii), a mixture of an aliphatic polyester of diacid-diol ii) and polyhydroxyalkanoate iv), a mixture of an aliphatic-aromatic polyester i) and polyhydroxyalkanoate iv), a mixture of an aliphatic-aromatic polyester i), polyhydroxyalkanoate iv) and inorganic mineral filler v).

Polymer layer B in contact with the cellulose-based substrate comprises at least 50% by weight of a biodegradable aliphatic polyester iii), the dicarboxylic component of which comprises, or preferably consists of, one or more aliphatic dicarboxylic acids having between 7 and 13 carbon atoms, the diol component of which is chosen from butanediol or ethylene glycol. This polymer layer B must not exhibit melting peaks at temperatures above 75°C measured by differential scanning calorimetry (DSC).

Preferably polymer layer B comprises at least 75% by weight, preferably at least 85%, more preferably at least 95% by weight of a biodegradable aliphatic polyester iii), the dicarboxylic component of which comprises, or preferably consists of, one or more aliphatic dicarboxylic acids having a number of carbon atoms between 7 and 13, the diol component of which is chosen from butanediol or ethylene glycol. In a preferred aspect of the invention, said dicarboxylic component comprises at least 50% by weight, at least 75% by weight, more preferably at least 85%, even more preferably at least 95% by weight of one or more aliphatic dicarboxylic acids having a number of carbon atoms between 7 and 13.

Preferably polymer layer B does not contain starch.

In a preferred aspect of the invention, the dicarboxylic component of biodegradable aliphatic polyester iii) in polymer layer B is sebacic acid.

Surprisingly, use of this multilayer film according to the invention allows for higher adhesion strengths on cellulose-based substrates than those found in the known art, thus enabling defect-free thermally laminated containers to be obtained even when using lower thermal lamination temperatures.

The liner according to the invention is a multilayer film comprising at least two layers. However, there may also be additional functional layers which provide a barrier to oxygen and/or moisture. For example, a multilayer film in which a polymer layer C comprising an aliphatic-aromatic polyester i), a polyhydroxyalkanoate iv) or a mixture thereof is included between polymer layer A and polymer layer B in contact with the cellulose-based substrate is preferred.

A particularly preferred multilayer film is one in which polymer layer A comprises an aliphatic-aromatic polyester i), a polyhydroxyalkanoate iv) and an inorganic filler v), polymer layer B comprises a biodegradable aliphatic polyester iii), the dicarboxylic component of which comprises, or preferably consists of sebacic acid and the diol component of which is chosen from butanediol or ethylene glycol, and polymer layer C comprises an aliphatic-aromatic polyester i) and a polyhydroxyalkanoate iv).

Another particularly preferred multilayer film is one in which polymer layer A comprises an aliphatic diacid-diol polyester ii) and a polyhydroxyalkanoate iv), polymer layer B comprises a biodegradable aliphatic polyester iii), the dicarboxylic component of which comprises sebacic acid and the diol component of which is chosen from butanediol or ethylene glycol, and polymer layer C comprises an aliphatic-aromatic polyester i).

Between the layer in contact with the cellulose and the layer in contact with the food there may be other polymer layers constituting the film. The materials constituting these polymer layers may be those in the list for the layer in contact with food.

A polymer layer conferring oxygen barrier properties (polymer layer E) may also be present between the layer in contact with the cellulose and the layer in contact with the food. In order to improve adhesion between the layer imparting oxygen barrier properties and the materials of the adjacent layers, polymer layers of a material having this property, generally referred to as "tie layers" (polymer layers D and F), may be inserted.

In particular, polymer layer E, which provides oxygen barrier properties, helps to maintain the characteristics of the food product whose integrity might deteriorate during the period the product is in storage.

Polymer layer E may be appropriately chosen from among those known in the art for this purpose such as metallisation layers, coatings based on silicon and/or silicon oxides, coatings based on aluminium and/or aluminium oxides, polyvinyl alcohol (PVOH) and/or butenediol vinyl alcohol copolymer (BVOH, "G polymer^{™}"), polyglycolic acid and its copolymers, polymers and/or copolymers of furandicarboxylic acid and combinations thereof.

With regard to the tie layers, these can be defined as polymer layers that bond to both polar and non-polar polymers typically used to produce sheets with at least three coextruded layers. Products known in the art such as, for example, aliphatic polyesters or biodegradable aliphatic-aromatic polyesters functionalised with α,β-unsaturated carboxylic acids (e.g. BTR8002P^{™}) may be used.

A preferred aspect of the invention relates to a multilayer film in which the following layers are included between polymer layer A and polymer layer B in contact with the cellulose-based substrate:
- a first tie layer D comprising a biodegradable aliphatic polyester or aliphatic-aromatic polyester functionalised with α,β-unsaturated carboxylic acids;
- a polymer layer E comprising a polymer chosen from polyvinyl alcohol (PVOH) and butenediol vinyl alcohol copolymer (BVOH);
- a second tie layer F comprising a biodegradable aliphatic polyester or aliphatic-aromatic polyester functionalised with α,β-unsaturated carboxylic acids.

With regard to the technical characteristics of the layers, polymer layer A and polymer layer B preferably have a thickness of between 10 and 100 µm, each tie layer preferably has a thickness of between 1 and 10 µm; polymer layer E preferably has a thickness of between 1 and 15 µm.

Said multilayer film with at least two polymer layers A and B may advantageously be produced by means of film blow-moulding processes in which the bubble can be opened allowing single-layer film reels to be collected downstream of the film-forming process. This feature is particularly advantageous in terms of the productivity of the production process.

The bubble blow film-forming process is preferably characterised by blow-up ratio (BUR or transverse stretch) values from 2 to 5, and drawdown ratio (DDR or longitudinal stretch) values in the machine direction (MD) from 3 to 60. For the purposes of the present invention, DDR means the measure of the elongation undergone by the melt exiting the extruder in the draft direction; BUR means the ratio of the bubble diameter to the die diameter.

The multilayer film with at least two polymer layers A and B according to the invention is particularly suitable for the manufacture of thermally laminated articles such as, for example, plates, glasses, rigid containers, beverage dispensing capsules, lids and food containers.

In addition to having the ability to adhere very well to the cellulose substrate, all the films according to the invention described above also have another fundamental characteristic for use as a liner, namely that they can be easily formed inside the container cavity without presenting defects. In fact, during the thermo-lamination process, the liner is thermoformed inside the container (and simultaneously adheres to it) so that it can completely cover the cavity wall. Forming of the liner may be more or less complex, depending on its stretch ratio and the complexity of the shape of the container cavity.

Two judgement criteria have been considered for assessing good liner forming capacity: i) possible breakage of the liner during the process (micro-breaks, pin-holes are also considered) and ii) complete or partial filling of the container cavity. Liner structures that have a good forming capacity can be considered to be those that completely fill the container cavity, adhering to its walls, without puncturing.

### Example 1

### Adhesion tests

Multilayer films of thickness of 50 µm were thermally laminated to assess the adhesion of the liner to cellulose substrates. These multilayer films were obtained by bubble film-forming in a Bandera three-layer coextruder.

**Table 1: Percentage compositions by weight of the polymer layers**

| Composition | PBAT | PLA-1 | PLA-2 | Talc | PBSeb |
|---|---|---|---|---|---|
| A1 | 27 | 57 | - | 16 | - |
| C1 | 75 | - | 25 | - | - |
| B1 | - | - | - | - | 100 |
| B2 | 50 | 10 | - | - | 40 |

| | | | | | |
|---|---|---|---|---|---|
| PLA-1: Natureworks 4043D^{™}; PLA-2: Natureworks 3251D^{™}; Talc: Mistron R10C^{™}; PBAT: Poly(1,4-butylene adipate-co-1,4-butylene terephthalate) with a terephthalic acid content of 47% in moles in relation to the total dicarboxylic component; PBSeb: Poly(1,4-butylene sebacate). | | | | | |

The multilayer film according to the invention (structure 1) consists of polymer layer A1 in contact with the food, central polymer layer C1 and polymer layer B1 in contact with the cellulose. Expressed as a percentage, the distribution between the thicknesses of the polymer layers A1/C1/B1 is 20%/55%/25%.

This multilayer film was compared with a similar multilayer film that differs from the former in that the polymer layer in contact with the cellulose substrate has the composition B2 (comparison structure 2).

The two multilayer films were thermally laminated to the same cellulose pulp tray.

Before the film was thermally laminated, a piece of Teflon tape was applied to part of the base of the tray so that the film did not adhere to the tape but was only in contact with the cellulose pulp. Specimens measuring 60 x 25 mm were die-cut from the base of the trays to measure adhesion strength; these were die-cut so that the specimen consisted of a part approximately 20 mm long in which the film was welded to the cellulose pulp, while in the remaining 40 mm the film was detached from the substrate (because the Teflon adhesive tape was present). Using these specimens, measurements were made to derive adhesion strength according to the *"ASTM F88 Technique A: Unsupported method"* using a velocity of 300mm/min.

The adhesion forces are as shown in Table 2:

**Table 2**

| Structure | Temperature corresponding to the maximum endothermic peaks found by DSC analysis of polymer layer B [°C]. | Adhesion force [N] |
|---|---|---|
| 1 (according to the invention) | 69 | 0.9 ± 0.09 |
| 2 (comparative) | 63 (peak 1), 116°C (peak 2) and 144 (peak 3) | 0.3 ± 0.05 |

As can be seen, the multilayer film with structure 1 appears to have better adhesion to the pulp than the multilayer film with structure 2, which has melt peaks above 75°C.

## Claims

1. Multilayer film comprising at least two layers for thermal lamination on cellulose-based substrates including:
a first polymer layer A comprising a biodegradable polymer chosen from an aliphatic-aromatic polyester i), an aliphatic polyester ii), and a mixture thereof, in which said aliphatic polyester ii) is chosen from diacid diol polyesters, polyhydroxyalkanoates and mixtures thereof, and
a second polymer layer B in contact with the cellulose-based substrate comprising at least 50% by weight of a biodegradable aliphatic polyester iii), the dicarboxylic component of which comprises one or more aliphatic dicarboxylic acids with between 7 and 13 carbon atoms and the diol component of which is chosen from butanediol or ethylene glycol; said layer B must not have melting peaks at temperatures above 75°C as measured by differential scanning calorimetry (DSC).

2. Multilayer film according to claim 1, in which in polymer layer A the aliphatic-aromatic polyester i) comprises:
a) a dicarboxylic component comprising, in relation to the total dicarboxylic component
a1) 30-70% in moles, preferably 40-60% in moles, of units derived from at least one aromatic dicarboxylic acid;
a2) 70-30% in moles, preferably 60-40% in moles, of units derived from at least one saturated aliphatic dicarboxylic acid;
a3) 0-5% in moles of units derived from at least one unsaturated aliphatic dicarboxylic acid;
b) a diol component comprising, in relation to the total diol component:
b1) 95-100% in moles of units derived from at least one saturated aliphatic diol;
b2) 0-5% in moles of units derived from at least one unsaturated aliphatic diol.

3. Multilayer film according to claim 1, in which in polymer layer A aliphatic polyester ii) comprises:
c) a dicarboxylic component comprising, compared to the total of the dicarboxylic component:
c1) 60-100% in moles of units derived from succinic acid;
c2) 0-40% in moles of units derived from at least one saturated dicarboxylic acid with a number of carbon atoms greater than 4;
d) a diol component comprising, in relation to the total diol component:
d1) 95-100% in moles of units derived from 1,4-butanediol;
d2) 0-5% in moles of units derived from at least one saturated aliphatic diol other than 1,4-butanediol.

4. Multilayer film according to claims 1 to 3, in which said aliphatic polyester ii) in polymer layer A comprises up to 70% by weight of polyhydroxyalkanoate iv) in relation to the total polymer component of layer A.

5. Multilayer film according to claim 4, in which polyhydroxyalkanoate iv) is chosen from polylactic acid, polyhydroxybutyrate, and polyhydroxybutyrate copolymers.

6. Multilayer film according to claims 1 to 5, in which polymer layer A comprises a process additive chosen from the family of stearates or fatty acid amides.

7. Multilayer film according to claim 6, in which the process additive is ethylene-bis-stereamide (EBS).

8. Multilayer films according to claims 1 to 7, in which polymer layer A additionally comprises up to 30% by weight in relation to the polymer of an inorganic mineral filler v).

9. Multilayer film according to claim 8, in which the inorganic mineral filler v) is talc.

10. Multilayer film according to claims 1 to 9, in which polymer layer B comprises at least 95% w/w of a biodegradable aliphatic polyester iii), the dicarboxylic component of which is one or more aliphatic dicarboxylic acids having a number of carbon atoms between 7 and 13, and the diol component of which is chosen from butanediol or ethylene glycol; said polymer layer B must not exhibit melting peaks at temperatures above 75°C measured by DSC.

11. Multilayer film according to claims 1 to 10, in which in polymer layer B the dicarboxylic component of the biodegradable aliphatic polyester iii) comprises sebacic acid.

12. Multilayer film according to claims 1 to 11 in which, included between polymer layer A and polymer layer B in contact with the cellulose-based substrate, there is a polymer layer C comprising an aliphatic-aromatic polyester i), a polyhydroxyalkanoate iv), or a mixture thereof.

13. Multilayer film according to claim 12, in which polymer layer A comprises an aliphatic-aromatic polyester i), a polyhydroxyalkanoate iv) and an inorganic filler (v), polymer layer B comprises a biodegradable aliphatic polyester iii), the dicarboxylic component of which comprises sebacic acid and the diol component of which is chosen from butanediol or ethylene glycol, and polymer layer C comprises an aliphatic-aromatic polyester i) and a polyhydroxyalkanoate iv).

14. Multilayer film according to any one or more of claims 1 to 13, in which the following layers are included between polymer layer A and polymer layer B in contact with the cellulose-based substrate:
- a first tie layer D comprising a biodegradable aliphatic polyester or aliphatic-aromatic polyester functionalised with α,β-unsaturated carboxylic acids;
- a polymer layer E comprising a polymer chosen from polyvinyl alcohol (PVOH) and butenediol vinyl alcohol copolymer (BVOH);
- a second tie layer F comprising a biodegradable aliphatic polyester or an aliphatic-aromatic polyester functionalised with α,β-unsaturated carboxylic acids.

15. Use of a multilayer film according to one or more of the preceding claims for the production of thermally laminated articles.

16. Thermally laminated articles comprising the multilayer film according to claims 1-14.

17. Thermally laminated articles according to claim 16, selected from the group consisting of plates, glasses, rigid containers, beverage dispensing capsules, lids and food containers.

## Patentansprüche

1. Mehrschichtige Folie, umfassend mindestens zwei Schichten, zur thermischen Laminierung auf Substrate auf Cellulosebasis, welche einschließt:
eine erste Polymerschicht A, umfassend ein biologisch abbaubares Polymer ausgewählt aus einem aliphatisch-aromatischen Polyester i), einem aliphatischen Polyester ii) und einer Mischung davon, wobei der aliphatische Polyester ii) ausgewählt ist aus Disäurediolpolyestern, Polyhydroxyalkanoaten und Mischungen davon, und
eine zweite Polymerschicht B in Kontakt mit dem Substrat auf Cellulosebasis, umfassend mindestens 50 Gew.-% eines biologisch abbaubaren aliphatischen Polyesters iii), dessen Dicarboxylkomponente eine oder mehrere aliphatische Dicarbonsäuren mit 7 bis 13 Kohlenstoffatomen umfasst und dessen Diolkomponente ausgewählt ist aus Butandiol oder Ethylenglykol; wobei diese Schicht B bei Temperaturen oberhalb von 75 °C keine Schmelzpeaks aufweisen darf, gemessen durch Differential-Scanning-Kalorimetrie (DSC).

2. Mehrschichtige Folie nach Anspruch 1, wobei in Polymerschicht A der aliphatischaromatische Polyester i) Folgendes umfasst:
a) eine Dicarboxylkomponente, die bezogen auf die gesamte Dicarboxylkomponente Folgendes umfasst:
a1) 30-70 Mol-%, vorzugsweise 40-60 Mol-%, Einheiten, die von mindestens einer aromatischen Dicarbonsäure abgeleitet sind;
a2) 70-30 Mol-%, vorzugsweise 60-40 Mol-%, Einheiten, die von mindestens einer gesättigten aliphatischen Dicarbonsäure abgeleitet sind;
a3) 0-5 Mol-% Einheiten, die von mindestens einer ungesättigten aliphatischen Dicarbonsäure abgeleitet sind;
b) eine Diolkomponente, die bezogen auf die gesamte Diolkomponente Folgendes umfasst:
b1) 95-100 Mol-% Einheiten, die von mindestens einem gesättigten aliphatischen Diol abgeleitet sind;
b2) 0-5 Mol-% Einheiten, die von mindestens einem ungesättigten aliphatischen Diol abgeleitet sind.

3. Mehrschichtige Folie nach Anspruch 1, wobei in Polymerschicht A der aliphatische Polyester ii) Folgendes umfasst:
c) eine Dicarboxylkomponente, die im Vergleich zur Summe der Dicarboxylkomponente Folgendes umfasst:
c1) 60-100 Mol-% Einheiten, die von Bernsteinsäure abgeleitet sind;
c2) 0-40 Mol-% Einheiten, die von mindestens einer gesättigten Dicarbonsäure mit einer Anzahl von Kohlenstoffatomen größer als 4 abgeleitet sind;
d) eine Diolkomponente, die bezogen auf die gesamte Diolkomponente Folgendes umfasst:
d1) 95-100 Mol-% Einheiten, die von 1,4-Butandiol abgeleitet sind;
d2) 0-5 Mol-% Einheiten, die von mindestens einem gesättigten aliphatischen Diol abgeleitet sind, das von 1,4-Butandiol verschieden ist.

4. Mehrschichtige Folie nach den Ansprüchen 1 bis 3, wobei der aliphatische Polyester ii) in Polymerschicht A bis zu 70 Gew.-% Polyhydroxyalkanoat iv) umfasst, bezogen auf die gesamte Polymerkomponente der Schicht A.

5. Mehrschichtige Folie nach Anspruch 4, wobei Polyhydroxyalkanoat iv) ausgewählt ist aus Polymilchsäure, Polyhydroxybutyrat und Polyhydroxybutyrat-Copolymeren.

6. Mehrschichtige Folie nach den Ansprüchen 1 bis 5, wobei Polymerschicht A ein Prozessadditiv ausgewählt aus der Familie der Stearate oder Fettsäureamide umfasst.

7. Mehrschichtige Folie nach Anspruch 6, wobei das Prozessadditiv Ethylen-bis-stearamid (EBS) ist.

8. Mehrschichtige Folien nach den Ansprüchen 1 bis 7, wobei Polymerschicht A zusätzlich bis zu 30 Gew.-% eines anorganischen mineralischen Füllstoffs v) umfasst, bezogen auf das Polymer.

9. Mehrschichtige Folie nach Anspruch 8, wobei der anorganische mineralische Füllstoff v) Talkum ist.

10. Mehrschichtige Folie nach den Ansprüchen 1 bis 9, wobei Polymerschicht B mindestens 95 % Gew./Gew. eines biologisch abbaubaren aliphatischen Polyesters iii) umfasst, dessen Dicarboxylkomponente eine oder mehrere aliphatische Dicarbonsäuren mit einer Anzahl an Kohlenstoffatomen zwischen 7 und 13 ist und dessen Diolkomponente ausgewählt ist aus Butandiol oder Ethylenglykol; wobei diese Polymerschicht B bei Temperaturen oberhalb von 75 °C keine Schmelzpeaks aufweisen darf, gemessen mittels DSC.

11. Mehrschichtige Folie nach den Ansprüchen 1 bis 10, wobei in Polymerschicht B die Dicarboxylkomponente des biologisch abbaubaren aliphatischen Polyesters iii) Sebacinsäure umfasst.

12. Mehrschichtige Folie nach den Ansprüchen 1 bis 11, wobei zwischen Polymerschicht A und Polymerschicht B in Kontakt mit dem Substrat auf Cellulosebasis eine Polymerschicht C eingeschlossen ist, die einen aliphatisch-aromatischen Polyester i), ein Polyhydroxyalkanoat iv) oder eine Mischung davon umfasst.

13. Mehrschichtige Folie nach Anspruch 12, wobei Polymerschicht A einen aliphatisch-aromatischen Polyester i), ein Polyhydroxyalkanoat iv) und einen anorganischen Füllstoff (v) umfasst, Polymerschicht B einen biologisch abbaubaren aliphatischen Polyester iii) umfasst, dessen Dicarboxylkomponente Sebacinsäure umfasst und dessen Diolkomponente ausgewählt ist aus Butandiol oder Ethylenglykol, und Polymerschicht C einen aliphatisch-aromatischen Polyester i) und ein Polyhydroxyalkanoat iv) umfasst.

14. Mehrschichtige Folie nach einem oder mehreren der Ansprüche 1 bis 13, wobei die folgenden Schichten zwischen Polymerschicht A und Polymerschicht B in Kontakt mit dem Substrat auf Cellulosebasis eingeschlossen sind:
- eine erste Verbindungsschicht D, umfassend einen biologisch abbaubaren aliphatischen Polyester oder aliphatisch-aromatischen Polyester, der mit α,β-ungesättigten Carbonsäuren funktionalisiert ist;
- eine Polymerschicht E, umfassend ein Polymer ausgewählt aus Polyvinylalkohol (PVOH) und Butendiol-Vinylalkohol-Copolymer (BVOH);
- eine zweite Verbindungsschicht F, umfassend einen biologisch abbaubaren aliphatischen Polyester oder einen aliphatisch-aromatischen Polyester, der mit α,β-ungesättigten Carbonsäuren funktionalisiert ist.

15. Verwendung einer mehrschichtigen Folie nach einem oder mehreren der vorhergehenden Ansprüche zur Produktion von thermisch laminierten Artikeln.

16. Thermisch laminierte Artikel, welche die mehrschichtige Folie gemäß den Ansprüchen 1-14 umfassen.

17. Thermisch laminierte Artikel nach Anspruch 16 ausgewählt aus der Gruppe bestehend aus Platten, Trinkgefäßen, starren Behältern, Getränkeabgabekapseln, Deckeln und Lebensmittelbehältern.

## Revendications

1. Film multicouche comprenant au moins deux couches pour la stratification thermique sur des substrats à base de cellulose comprenant :
une première couche de polymère A comprenant un polymère biodégradable choisi parmi un polyester aliphatique-aromatique i), un polyester aliphatique ii), et un mélange de ceux-ci, dans laquelle ledit polyester aliphatique ii) est choisi parmi les diol diacide polyesters, les polyhydroxyalcanoates et leurs mélanges, et
une deuxième couche de polymère B en contact avec le substrat à base de cellulose comprenant au moins 50 % en poids d'un polyester aliphatique biodégradable iii) dont le composant dicarboxylique comprend un ou plusieurs acides dicarboxyliques aliphatiques ayant entre 7 et 13 atomes de carbone et dont le composant diol est choisi parmi le butanediol ou l'éthylène glycol ; ladite couche B ne devant pas avoir de pics de fusion à des températures supérieures à 75 °C telles que mesurées par calorimétrie différentielle à balayage (DSC).

2. Film multicouche selon la revendication 1, dans lequel dans la couche de polymère A le polyester aliphatique-aromatique i) comprend :
a) un composant dicarboxylique comprenant, par rapport au composant dicarboxylique total
a1) 30-70 % en moles, de préférence 40-60 % en moles de motifs issus d'au moins un acide dicarboxylique aromatique ;
a2) 70-30 % en moles, de préférence 60-40 % en moles de motifs issus d'au moins un acide dicarboxylique aliphatique saturé ;
a3) 0-5 % en moles de motifs issus d'au moins un acide dicarboxylique aliphatique insaturé ;
b) un composant diol comprenant, par rapport au composant diol total :
b1) 95-100 % en moles de motifs issus d'au moins un diol aliphatique saturé;
b2) 0-5 % en moles de motifs issus d'au moins un diol aliphatique insaturé.

3. Film multicouche selon la revendication 1, dans lequel dans la couche de polymère A le polyester aliphatique ii) comprend :
c) un composant dicarboxylique comprenant, par rapport au total du composant dicarboxylique :
c1) 60-100 % en moles de motifs issus de l'acide succinique ;
c2) 0-40 % en moles de motifs issus d'au moins un acide dicarboxylique saturé ayant un nombre d'atomes de carbone supérieur à 4 ;
d) un composant diol comprenant, par rapport au composant diol total :
d1) 95-100 % en moles de motifs issus du 1,4-butanediol ;
d2) 0-5 % en moles de motifs issus d'au moins un diol aliphatique saturé autre que le 1,4-butanediol.

4. Film multicouche selon les revendications 1 à 3, dans lequel ledit polyester aliphatique ii) dans la couche de polymère A comprend jusqu'à 70 % en poids de polyhydroxyalcanoate iv) par rapport au composant polymère total de la couche A.

5. Film multicouche selon la revendication 4, dans lequel le polyhydroxyalcanoate iv) est choisi parmi l'acide polylactique, le polyhydroxybutyrate, et les copolymères de polyhydroxybutyrate.

6. Film multicouche selon les revendications 1 à 5, dans lequel la couche de polymère A comprend un additif de procédé choisi dans la famille des stéarates ou des amides d'acides gras.

7. Film multicouche selon la revendication 6, dans lequel l'additif de procédé est l'éthylène-bis-stéréamide (EBS).

8. Films multicouches selon les revendications 1 à 7, dans lesquels la couche de polymère A comprend en outre jusqu'à 30 % en poids, par rapport au polymère, d'une charge minérale inorganique v).

9. Film multicouche selon la revendication 8, dans lequel la charge minérale inorganique v) est du talc.

10. Film multicouche selon les revendications 1 à 9, dans lequel la couche de polymère B comprend au moins 95 % p/p d'un polyester aliphatique biodégradable iii) dont le composant dicarboxylique est un ou plusieurs acides dicarboxyliques aliphatiques ayant un nombre d'atomes de carbone compris entre 7 et 13, et dont le composant diol est choisi parmi le butanediol ou l'éthylène glycol ; ladite couche de polymère B ne devant pas présenter de pics de fusion à des températures supérieures à 75 °C mesurées par DSC.

11. Film multicouche selon les revendications 1 à 10, dans lequel, dans la couche de polymère B, le composant dicarboxylique du polyester aliphatique biodégradable iii) comprend de l'acide sébacique.

12. Film multicouche selon les revendications 1 à 11, dans lequel, comprise entre la couche de polymère A et la couche de polymère B en contact avec le substrat à base de cellulose, il y a une couche de polymère C comprenant un polyester aliphatique-aromatique i), un polyhydroxyalcanoate iv), ou un mélange de ceux-ci.

13. Film multicouche selon la revendication 12, dans lequel la couche de polymère A comprend un polyester aliphatique-aromatique i), un polyhydroxyalcanoate iv) et une charge inorganique (v), la couche de polymère B comprend un polyester aliphatique biodégradable iii) dont le composant dicarboxylique comprend de l'acide sébacique et dont le composant diol est choisi parmi le butanediol ou l'éthylèneglycol, et la couche de polymère C comprend un polyester aliphatique-aromatique i) et un polyhydroxyalcanoate iv).

14. Film multicouche selon l'une quelconque ou plusieurs des revendications 1 à 13, dans lequel les couches suivantes sont comprises entre la couche de polymère A et la couche de polymère B en contact avec le substrat à base de cellulose :
- une première couche de liaison D comprenant un polyester aliphatique biodégradable ou polyester aliphatique-aromatique fonctionnalisé par des acides carboxyliques α,β-insaturés ;
- une couche de polymère E comprenant un polymère choisi parmi un poly(alcool vinylique) (PVOH) et un copolymère butènediol alcool vinylique (BVOH) ;
- une deuxième couche de liaison F comprenant un polyester aliphatique biodégradable ou un polyester aliphatique-aromatique fonctionnalisé par des acides carboxyliques α,β-insaturés.

15. Utilisation d'un film multicouche selon l'une ou plusieurs des revendications précédentes pour la fabrication d'articles stratifiés thermiquement.

16. Articles stratifiés thermiquement comprenant le film multicouche selon les revendications 1 à 14.

17. Articles stratifiés thermiquement selon la revendication 16, choisis dans le groupe constitué par des plaques, verres, récipients rigides, capsules de distribution de boissons, couvercles et récipients alimentaires.
